**Europäisches Patentamt**

(19) **European Patent Office**

**Office européen des brevets**

(11) Numéro de publication: **0 128 080**
**B1**

(12) **FASCICULE DE BREVET EUROPEEN**

(45) Date de publication du fascicule du brevet:
20.11.86

(51) Int. Cl.⁴: **F 16 B 33/00**

(21) Numéro de dépôt: **84401058.7**

(22) Date de dépôt: **23.05.84**

(54) Dispositif d'assemblage de matériaux composites.

(30) Priorité: **27.05.83 FR 8308838**

(43) Date de publication de la demande:
**12.12.84 Bulletin 84/50**

(45) Mention de la délivrance du brevet:
**20.11.86 Bulletin 86/47**

(84) Etats contractants désignés:
**BE DE GB IT NL SE**

(56) Documents cités:
**FR - A - 1 126 784**
**FR - A - 2 142 201**
**FR - A - 2 407 383**
**GB - A - 929 807**
**US - A - 3 742 583**
**US - A - 4 102 036**

(73) Titulaire: **SIMMONDS S.A:, 5 rue Michelet,**
**F-92152 Suresnes Cedex (FR)**
Titulaire: **Société Nationale Industrielle Aérospatiale**
**Société anonyme dite:, 37 Bld de Montmorency,**
**F-75016 Paris (FR)**

(72) Inventeur: **Grignon, Bernard, Route de**
**Nogent-le-Bernard, F-72110 Bonnetable (FR)**
Inventeur: **Boire, Maxime, 11 avenue Sainte Marie,**
**F-92370 Chaville (FR)**

(74) Mandataire: **Durand, Yves Armand Louis et al, Cabinet Z.**
**Weinstein 20, Avenue de Friedland, F-75008 Paris (FR)**

## Description

La présente invention a essentiellement pour objet un dispositiv du type boulon pour l'assemblage de plaques ou panneaux de matériaux composites constitués par des fibres enrobées d'une résine synthétique ou analogue.

Dans l'industrie aéronautique, on utilise actuellement de plus en plus des matériaux composites qui remplacent avantageusement les matériaux que l'on utilisait traditionnellement pour réaliser telle ou telle pièce ou partie d'un aéronef. Cependant, l'assemblage de telles pièces en matériau composite n'est pas sans poser de nombreux problèmes.

En effet, bien que ces matériaux soient avantageux sur le plan notamment de la légèreté et de leurs propriétés mécaniques très élevées, ils présentent généralement une mauvaise résistance à la compression et au matage et sont souvent sensibles à l'humidité de sorte que leur volume peut varier. Tout cela, comme on le comprend, pose de nombreux problèmes eu égard à l'assemblage des pièces en matériaux composites.

C'est ainsi que les techniques usuelles de collage ne peuvent pas être utilisées, car les efforts sur les joints collés peuvent entraîner des délaminages ou des arrachements du matériau composite constituant les pièces collées. De même, les techniques de rivetage sont interdites, car les chocs et contraintes développées lors de la formation des têtes de rivet peuvent endommager gravement le composite. Aussi, on utilise actuellement des boulons pour réaliser ces assemblages, mais les résultats sont loin d'être satisfaisants.

En effet, avec les boulons classiques, il y a un gros risque, lors du serrage de l'écrou, de dépasser la résistance maximum au matage des matériaux composites.

De plus, les matériaux constituant les boulons classiques possèdent un potentiel galvanique sensiblement différent de celui des matériaux composites. Par conséquent, le joint boulonné procure un effet de pile qui entraîne une destruction très rapide du boulon sous l'effet d'une corrison dite galvanique. On peut bien sûr remédier à cela en utilisant pour le boulon des matériaux très nobles tels que par exemple des alliages de titane, mais ces matériaux sont extrêmement coûteux et surabondants au niveau de leurs propriétés mécaniques compte tenu de la faible pression de matage admissible.

Enfin, du fait de l'absence d'élasticité des boulons classiques, ceux-ci ne peuvent pas absorber les variations d'épaisseur des éléments composites, de sorte qu'une rupture de l'assemblage peut se produire, ce qui doit évidemment être évité à tout prix dans l'industrie aéronautique.

Dans le document GB-A-929 807, est décrit un boulon comprenant une vis et un écrou constitué par un canon intérieur taraudé et raccordé à une jupe extérieure coaxiale ou canon et pourvue à son extrémité libre d'une embase périphérique. Un élément annulaire est monté captif à l'extrémité libre du canon. Cet élément prend appui sur le dessous de l'embase et comporte une rondelle épaisse en matière plastique fixée sous cet élément de sorte que, lors du vissage de l'écrou, la rondelle se déforme et assure l'étanchéité au niveau de l'orifice des panneaux dans lequel passe la vis. Mais un tel boulon ne peut pas convenir pour l'assemblage de panneaux en matériaux composites, car l'étanchéité électrique vis-à-vis du matériau composite n'est pas réalisée notamment au niveau de la tête de la vis et de l'extrémité libre de l'embase de la jupe de l'écrou.

On connaît également, d'après le document FR-A-2 407 383, un boulon constitué par une vis dont la tête et la partie lisse peuvent être revêtus d'une couche isolante en matière plastique, et par un écrou qui est un écrou classique revêtu lui aussi d'une couche en matière plastique, et riveté sur une tôle. Mais là encore, un tel boulon ne peut convenir pour l'assemblage de pièces en matériau composite, car l'écrou ne possède aucune élasticité intrinsèque et détériorerait nécessairement les pièces en matériau composite qui, comme on l'a vu, est particulièrement fragile et présente une mauvaise résistance à la compression et au matage.

La présente invention a pour but de remédier à tous les inconvénients ci-dessus en proposant un boulon spécial pour l'assemblage de matériaux composites, lequel boulon, en raison notamment de son élasticité et de ses propriétés d'isolation électrique, présente toutes les qualités requises et indispensables pour fixer les pièces en matériaux composites utilisées en aéronautique.

A cet effet, l'invention a pour objet un dispositiv d'assemblage de matériaux composites revêtant par exemple la forme de plaques ou panneaux constitués par des fibres enrobées d'une résine synthétique ou analogue, et du type comprenant une vis munie d'une partie non filetée et d'une partie extérieurement filetée avec laquelle peut coopérer par vissage un écrou autoblocable sur lequel est monté captif un élément annulaire et qui est constitué par un canon intérieur taraudé et raccordé à une jupe extérieure coaxiale au canon et pourvue à son extrémité libre d'une embase périphérique dont la face inférieure délimite, avec la face inférieure du canon, un espace annulaire à l'intérieur de l'écrou, caractérisé en ce que ledit élément annulaire est monté captif autour de l'embase et comprend une partie susceptible de prendre appui de manière électriquement étanche sur le panneau en matériau composite et comportant un orifice dont le diamètre correspond au diamètre intérieur de la jupe de l'écrou, tandis qu'autour de la partie non filetée de la vis est prévu un manchon électriquement étanche vis-à-vis du matériau composite et dont une extrémité recouvre au moins une partie de la tête de la vis, tandis que l'autre extrémité du manchon s'étend au delà de l'épaisseur des panneaux assemblés vers l'espace annulaire au travers de l'orifice dans la partie précitée de l'élément annulaire.

On comprend donc déjà que les qualités d'élasticité de l'écrou et d'étanchéité électrique du boulon vis-à-vis du matériau composite, rendent celui-ci tout à fait apte à réaliser un assemblage qui soit parfaitement rigide et fiable dans le temps. En effet, l'élasticité de l'écrou permettra toujours de rattraper les variations possibles de l'épaisseur des panneaux composites. Quant à l'étanchéité électrique, elle permettra d'éviter toute corrosion galvanique du boulon qui, de ce fait, pourra avantageusement être réalisé en un matériau peu coûteux, tel qu'un alliage d'aluminium.

Suivant une autre caractéristique de l'invention, l'élément annulaire captif est soit réalisé en une matière plastique isolante, soit entièrement revêtu d'un vernis isolant, tandis que le manchon est soit réalisé en une matière plastique isolante, soit constitué par un revêtement de vernis isolant.

Ce dispositiv est encore caractérisé en ce qu'il comprend une rondelle interposée entre la face inférieure de l'embase de la jupe et la partie de l'élément annulaire possédant un orifice dont le diamètre correspond au diamètre de la périphérie interne de la jupe de l'écrou.

Ainsi, une telle rondelle, de préférence métallique, empêchera l'élément annulaire captif de tourner avec l'écrou lors du serrage.

Suivant encore une autre caractéristique de l'invention, dans le cas où le manchon est en matière plastique isolante, l'extrémité de ce manchon, opposée à celle située du côté de la tête de vis, est chanfreinée.

Le dispositiv de l'invention est encore caractérisé par le fait que la périphérie externe de la jupe de l'écrou est munie de dents ou cannelures et éventuellement d'une bague rupturable sous l'effet d'un couple de serrage déterminé.

L'invention vise encore un assemblage de matériaux composites revêtant par exemple la forme de plaques ou panneaux, lequel assemblage est réalisé à l'aide d'au moins un dispositiv répondant aux caractéristiques sus-mentionnées.

Mais d'autres caractéristiques et avantages de l'invention apparaîtront mieux dans la description détaillée qui suit et se réfère aux dessins annexés, donnés uniquement à titre d'exemple, et dans lesquels:

la figure 1 est une vue en élévation et coupe axiale partielle d'un dispositiv d'assemblage selon l'invention en position serrée sur deux panneaux, et

la figure 2 est une vue en élévation et en coupe axiale partielle d'un autre mode de réalisation de dispositiv d'assemblage conforme à l'invention.

En se reportant à ces figures, on voit qu'un dispositif d'assemblage selon l'invention constitue un boulon comprenant essentiellement une vis 1 extérieurement filetée en 2 pour recevoir un écrou 3 élastique et auto-blocable, ledit boulon étant destiné à assembler des pièces diverses, telles que des plaques ou panneaux A et B, réalisées en un matériau composite, c'est-à-dire un matériau essentiellement constitué par des fibres de carbone, de verre ou analogue, noyées suivant une configuration donnée dans une résine synthétique telle que par exemple une résine époxy.

Comme cela est expliqué au début de la présente description, les matériaux composites présentent d'excellentes propriétés mécaniques, mais leur assemblage demeure délicat en raison notamment de leur fragilité sur le plan du matage, de leur variation possible de volume en fonction de l'humidité, et des problèmes de corrosion galvanique qu'ils engendrent. Aussi, la structure du boulon de l'invention est très particulière de façon à prendre en compte tous ces problèmes en vue de réaliser un assemblage parfait.

A cet effet, l'écrou 3 est constitué par un canon taraudé 4 raccordé par l'intermédiaire d'une partie annulaire 5 à une jupe extérieure 6 coaxiale au canon 4 et pourvue à son extrémité libre d'une embase périphérique 7.

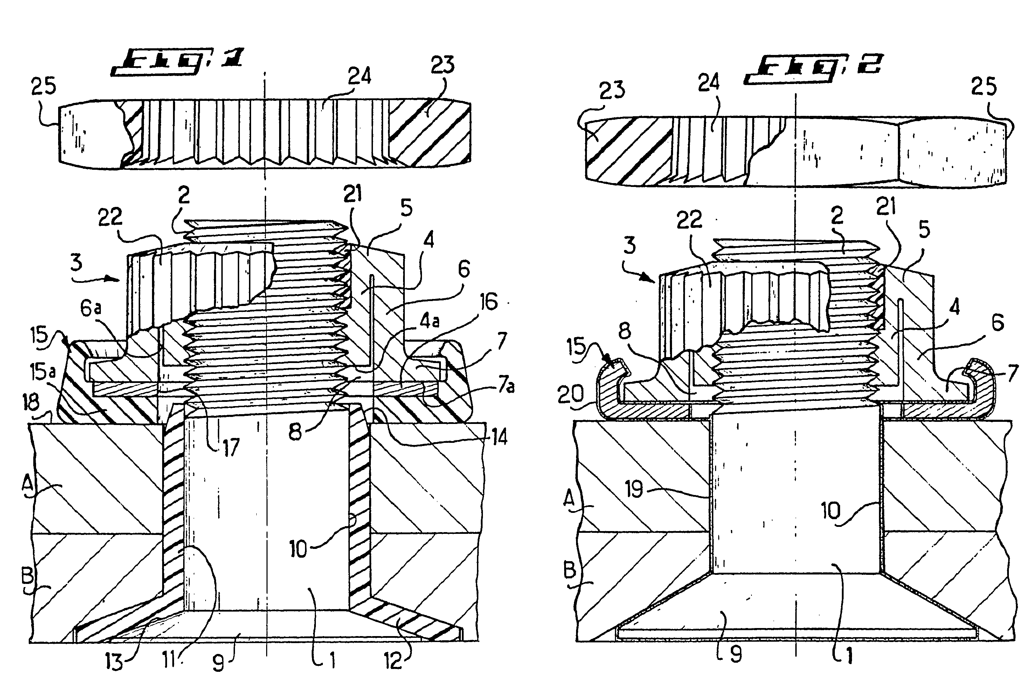

Comme on le voit bien sur les figures 1 et 2, un espace annulaire 8 est ménagé entre la face inférieure 4a du canon 4 et la face inférieure 7a de l'embase 7. Le filetage 2 de la vis 1 est, comme on le voit sur les figures, réalisé sur seulement la partie d'extrémité de cette vis pour coopérer avec le canon taraudé 4 de l'écrou. Entre la filetage 2 et la tête 9 de la vis 1, on voit que ladite vis comporte un fût lisse repéré en 10 et traversant un orifice ménagé dans les deux panneaux A et B.

Dans le mode de réalisation illustré par la figure 1, un manchon 11 en matière plastique électriquement étanche vis-à-vis du materiau composite des panneaux A et B est prévu autour de la partie lisse 10 de la vis 1, et se prolonge par une partie 12 pour recouvrir la totalité du dessous 13 de la tête 9 de la vis 1. L'extrémité du manchon 11 en regard de l'espace annulaire 8 est de préférence chanfreinée, comme on le voit en 14.

Sur l'embase 7 de l'écrou est monté captif un élément annulaire 15 en matière plastique qui, comme le manchon 11, est aussi électriquement étanche vis-à-vis du matériau composite des panneaux A et B. Cet élément 15 enserre une rondelle 16, de préférence métallique, cette rondelle étant interposée entre la face inférieure 7a de l'embase 7 et la partie 15a de l'élément annulaire 15 qui forme face d'appui de l'écrou sur les panneaux à assembler, comme on le voit bien sur la figure 1. On voit également sur cette figure que la rondelle 16 possède un orifice 17 dont le diamètre correspond au diamètre de la périphérie interne 6a de la jupe 6 de l'écrou.

Comme cela est bien visible sur la figure 1, l'extrémité chanfreinée 14 du manchon en plastique autour de la vis s'étend au-delà de l'épaisseur des panneaux A et B à assembler. Mais on pourrait très bien sans sortir du cadre de l'invention, utiliser un manchon 11 de longueur légèrement inférieure à l'épaisseur des panneaux A et B, ce qui permettrait d'éviter les phénomènes de délaminage lors de l'insertion de la vis 1 avec son manchon 11 dans l'orifice des panneaux. A cet égard, l'extrémité chanfreinée ou en ogive 14 du manchon 11 facilitera l'insertion et évitera tout délaminage possible, lors de cette insertion. En effet, on sait qu'en aéronautique notamment, il faut monter les vis avec un certain serrage dans l'alésage destiné à les recevoir, ceci afin d'éviter les efforts de cisaillage et d'augmenter les durées de vie à la fatigue des éléments assemblés. Ceci veut dire, dans le cas présent, que le diamètre extérieur du manchon 11 doit être légèrement supérieur au diamètre de l'alésage dans les panneaux A et B. Dans ces conditions, le chanfreinage 14 et éventuellement une longueur de manchon inférieure à celle de l'épaisseur des panneaux éviteront ou, à tout le moins minimiseront le délaminage, ce qui est indispensable dans le cas de matériaux composites si l'on veut préserver leurs propriétés mécaniques.

Pour réaliser l'assemblage des panneaux A et B, il suffit, comme on le comprend, de visser l'écrou sur la vis 1, la partie 15a de l'élément captif 15 prenant appui sur la surface 18 du panneau A. Il faut remarquer ici, que lors de la rotation de l'écrou, l'élément en plastique 15 captif autour de l'embase 7 sera immobilisé en rotation grâce à la rondelle métallique 16, puisque les coefficients de frottement entre rondelle et embase d'une part, et entre rondelle et partie 15a d'autre part, sont différents. Enfin, on insistera encore sur le fait que le manchon 11, 12 et l'élément annulaire 15 captif sur l'embase 7 de l'écrou réalisent une étanchéité électrique parfaite vis-à-vis du materiau composite des panneaux à assembler, et de nature à éviter toute corrosion galvanique de la vis 1 et de l'écrou 3 qui, de ce fait, peuvent être réalisés en un matériau classique et peu coûteux, tel que par exemple l'aluminium.

Dans le mode de réalisation illustré sur la figure 2, l'étanchéité électrique en question est tout simplement réalisée par une couche de vernis isolant 19 revêtant la partie lisse 10 de la vis 1 et l'intégralité de la tête 9 de cette vis, et par une couche de vernis isolant 20 revêtant l'élément annulaire 15 monté captif sur l'embase 7 de l'écrou. On voit ici que la rondelle entre embase 7 et élément 15 a été supprimée, mais on pourrait très bien prévoir l'interposition d'une telle rondelle comme dans le cas de la figure 1, sans sortir du cadre de l'invention. La nature et l'épaisseur de la couche de vernis 19, 20 seront évidemment choisies de façon à obtenir l'étanchéité électrique recherchée, étant bien entendu que la couche de vernis doit posséder une certaine solidité pour résister aus frottements lors de l'opération d'assemblage.

On a montré schématiquement en 21 sur les figures 1 et 2 un dépôt de matière plastique assurant l'autofreinage de l'écrou comme cela est connu en soi.

Pour permettre le serrage de l'écrou, la périphérie externe de la jupe 6 est munie de dents, cannelures ou analogues 22, comme on le voit sur les figures 1 et 2. Ces dents peuvent être en un nombre approprié de façon à correspondre aux dents ou cannelures d'une clé, par exemple du type dynanométrique, et permettant directement l'entraînement en rotation de l'écrou. Pour entraîner l'écrou, on peut également prévoir une bague 23 qui est représentée sur les figures comme étant séparée de l'écrou, mais qui, en réalité, est solidaire de la jupe 6 dudit écrou. Cette bague est intérieurement munie de dents 24 engrenant avec les dents 22 de la jupe 6, et la périphérie 25 de cette bague est par exemple hexagonale pour permettre son entraînement par une clé. Avantageusement, cette bague 23, qui est initialement solidaire de l'écrou, pourra se rompre pour un couple de serrage supérieur à une valeur prédéterminée. On comprend tout l'intérêt de l'utilisation d'une telle bague dans le cas de l'assemblage de matériaux composites sur lesquels il convient bien évidemment d'appliquer une force de serrage très précise compte tenu notamment de leur faible résistance au matage. En d'autres termes, on évitera de cette façon tout endommagement de l'assemblage.

On a donc réalisé suivant l'invention un boulon spécial qui satisfait toutes les conditions requises pour réaliser l'assemblage de matériaux composites et à savoir;

— une élasticité suffisante pour absorber les variations de volume du matériau composite en fonction de l'humidité;

— une étanchéité électrique parfaite vis-à-vis du matériau composite, ce qui supprime toute corrosion galvanique et permet par conséquent de réduire le coût du matériau de la vis et de l'écrou qui peuvent être tout simplement en aluminium;

— un serrage efficace des matériaux composites assemblés, et ce sans risque de matage; et

— la diminution au maximum du risque de délaminage, notamment lorsque la vis traverse l'alésage des matériaux composites à assembler. C'est-à-dire que les fibres du matériau composite ne subiront aucune contrainte tant au montage de la vis qu'au serrage du boulon.

Bien entendu, l'invention n'est nullement limitée aux modes de réalisation décrits et illustrés qui n'ont été donnés qu'à titre d'exemple.

**Revendications**

1. Dispositif d'assemblage de plaques ou panneaux de matériaux composites (A, B) constitués par des fibres enrobées d'une résine synthétique ou analogue, et du type comprenant une vis (1) munie d'une partie non filetée (10) et d'une partie extérieurement filetée (2) avec laquelle peut coopérer par vissage un écrou autoblocable (3) sur lequel est monté captif un élément annulaire (15) et qui est constitué par un canon intérieur taraudé (4) et raccordé à une jupe extérieure (6) coaxiale au canon et pourvue à son extrémité libre d'une embase périphérique (7) dont la face inférieure (7a) délimite, avec la face inférieure (4a) du canon (4), un espace annulaire (8) à l'intérieur de l'écrou, caractérisé en ce que ledit élément annulaire (15) est monté captif autour de l'embase (7) et comprend une partie (15a) susceptible de prendre appui de manière électriquequemt étanche sur le panneau (A) en matériau composite et comportant un orifice dont le diamètre correspond au diamètre intérieur de la jupe (6) de l'écrou, tandis qu'autour de la partie non filetée (10) de la vis (1) est prévu un manchon (11, 19) électriquement étanche vis-à-vis du matériau composite et dont une extrémité (12) recouvre au moins une partie de la tête (9) de la vis, tandis que l'autre extrémité (14) du manchon s'étend au delà de l'épaisseur des panneaux assemblés (A, B) vers l'espace annulaire (8) au travers de l'orifice dans la partie (15a) de l'élément annulaire (15).

2. Dispositif selon la revendication 1, caractérisé en ce que l'élément annulaire captif (15) est soit réalisé en une matière plastique isolante, soit entièrement revêtu d'un vernis isolant, tandis que le manchon (11, 19) est soit réalisé en une matière plastique isolante, soit constitué par un revêtement de vernis isolant.

3. Dispositif selon la revendication 1 ou 2, caractérisé en ce qu'il comprend une rondelle (16) interposée entre la face inférieure (7a) de l'embase (7) de la jupe (6) et la partie (15a) de l'élément annulaire (15), ladite rondelle possédant un orifice (17) dont le diamètre correspond au diamètre de la périphérie interne (6a) de la jupe (6) de l'écrou.

4. Dispositif selon l'une des revendications 1 à 3, caractérisé en ce que, dans le cas où le manchon (11) est en matière plastique isolante, l'extrémité (14) de ce manchon opposée à celle située du côté de la tête de vis est chanfreinée.

5. Dispositif selon l'une des revendications 1 à 4, caractérisé en ce que la périphérie de la jupe (6) de l'écrou (3) est munie de dents ou cannelures (22) et éventuellement d'une bague (23) rupturable sous l'effet d'un couple de serrage déterminé.

6. Assemblage de plaques ou panneaux en matériau composite à l'aide d'au moins un dispositif selon l'une des revendications 1 à 5.

## Patentansprüche

1. Vorrichtung zur Zusammenfügung von aus Verbundwerkstoffen bestehenden und durch in einem Kunstharz oder dgl. eingebetteten Fasern gebildeten Platten bzw. Tafeln (A, B), derjenigen Gattung, die eine Schraube (1) umfasst, welche mit einem nicht gewindeten Teil (10) und einem aussen gewindeten Teil (2) versehen ist, mit welchem eine selbsthemmende Mutter (3) durch Verschraubung zusammenwirken kann, an welcher ein ringförmiges Element (15) gefangen angeordnet ist und welche durch eine mit einem Innengewinde versehene innere Buchse (4) gebildet ist, die sich an einen coaxial zur Buchse liegenden Aussenmantel (6) anschliesst und an ihrem freien Ende mit einem Umfangsflansch (7) versehen ist, dessen Unterseite (7a) mit der Unterseite (4a) der Buchse (4) einen Ringraum (8) innerhalb der Mutter begrenzt, dadurch gekennzeichnet, dass das besagte ringförmige Element (15) gefangen um den Flansch (7) herum angeordnet ist und einen Teil (15a) umfasst, der an der Platte (A) aus Verbundwerkstoff in elektrisch abdichtender Weise abstützbar ist und eine Öffnung aufweist, deren Durchmesser dem Innendurchmesser des Mantels (6) der Mutter entspricht, während um den nicht gewindeten Teil (10) der Schraube (1) eine gegenüber dem Verbundwerkstoff elektrisch abdichtende Hülse (11, 19) vorgesehen ist, deren eine Ende (12) wenigstens einen Teil des Kopfes (9) der Schraube überdeckt, während das andere Ende (14) der Hülse sich über die Dicke der zusammengefügten Platten (A, B) auf den Ringraum (8) hin durch die Öffnung in dem Teil (15a) des ringförmigen Elementes (15) erstreckt.

2. Vorrichtung nach Anspruch 1, dadurch gekennzeichnet, dass das gefangene ringförmige Element (15) entweder aus isolierendem Kunststoff hergestellt oder gänzlich mit einem isolierenden Lack überzogen ist, während die Hülse (11, 19) entweder aus einem isolierenden Kunststoff hergestellt oder durch einen Überzug aus isolierendem Lack gebildet ist.

3. Vorrichtung nach Anspruch 1 oder 2, dadurch gekennzeichnet, dass sie eine zwischen der Unterseite (7a) des Flansches (7) des Mantels (6) und dem Teil (15a) des ringförmigen Elementes (15) zwischengefügte Unterlegscheibe (16) umfasst, wobei die besagte Unterlegscheibe eine Öffnung (17) aufweist, deren Durchmesser dem Durchmesser des Innenumfanges (6a) des Mantels (6) der Mutter entspricht.

4. Vorrichtung nach einem der Ansprüche 1 bis 3, dadurch gekennzeichnet, dass in dem Fall wo die Hülse (11) aus isolierendem Kunststoff besteht, das Ende (14) dieser Hülse, welche dem dem Schraubenkopf zugewandten Ende entgegengesetzt ist, abgeschrägt ist.

5. Vorrichtung nach einem der Ansprüche 1 bis 4, dadurch gekennzeichnet, dass der Aussenumfang des Mantels (6) der Mutter (3) mit Zähnen bzw. Riffelungen (22) und gegebenenfalls mit einem unter der Wirkung eines bestimmten Anziehungsspannmomentes zerbrechbaren Ring (23) versehen ist.

6. Zusammenbau von Platten bzw. Tafeln aus Verbundwerkstoff mit Hilfe von wenigstens einer Vorrichtung gemäss einem der Ansprüche 1 bis 5.

## Claims

1. A device for assembling plates or panels made of composite materials (A, B) constituted by fibres covered with a synthetic resin or the like, and of the type comprising a screw (1) provided with a non-threaded part (10) and an externally threaded part (2) to which can be associated by screwing a self-checking nut (3) on which is fixed a ring-shaped element (15) and which is constituted by an internal tapped barrel (4) and connected to an external skirt (6) coaxial to the barrel and provided at its extremity with a peripheral abutment cheek (7) the lower face (7a) of which delimits together with the lower face (4a) of the barrel (4) a ring-shaped space (8) inside the nut, characterized in that the said ring-shaped element (15) is fixed around the abutment cheek (7) and comprises a part (15a) offering resistance to electric current and liable to rest on the panel (A) made of composite materials and provided with an aperture, the diameter of which corresponds to the internal diameter of the skirt (6) of the nut, while around the non-threaded part (10) of the screw (1) is provided a sleeve (11, 19) offering resistance to electric current as regards the composite material and an extremity (12) of which covers at least one part of the head (9) of the screw, while the other extremity (14) of the sleeve spreads out beyond the thickness of the assembled panels (A, B) towards the ring-shaped space (8) through the aperture in the part (15a) of the ring-shaped element (15).

2. A device according to claim 1, characterized in that the fixed ring-shaped element (15) is either made of an insulating plastic material, or entirely covered with an insulating varnish, while the sleeve (11, 19) is either made of an insulating plastic material, or covered with an insulating varnish.

3. A device according to claim 1 or 2, characterized in that it comprises a washer (16) placed between the lower face (7a) of the abutment cheek (7) of the skirt (6) on the part (15a) of the ring-shaped element (15), the said washer being provided with an aperture (17) the diameter of which corresponds to the diameter of the internal periphery (6a) of the skirt (6) of the nut.

4. A device according to one of claims 1 to 3, characterized in that, in the case where the sleeve (11) is made of an insulating plastic material, the extremity (14) of the said sleeve opposite to the extremity beside the head of the screw is chamfered.

5. A device according to one of claims 1 to 4, characterized in that the external periphery of the skirt (6) of the nut (3) is provided with teeth or grooves (22) and if necessary with a collar (23) which can break off in case of a specific torque load.

6. Assembling of plates or panels made of composite materials with the help of at least a device according to one of claims 1 to 5.

**FIG. 2**

**FIG. 1**